(19) Europäisches Patentamt European Patent Office Office européen des brevets

(11) **EP 1 742 399 A1**

(12) **EUROPEAN PATENT APPLICATION**

(43) Date of publication:
**10.01.2007 Bulletin 2007/02**

(51) Int Cl.:
**H04J 3/07** (2006.01)

(21) Application number: **06012798.2**

(22) Date of filing: **22.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **08.07.2005 IT mi20051286**

(71) Applicant: **Alcatel**
**75008 Paris (FR)**

(72) Inventors:
• **Rinaldi, Sonia**
**23037 Tirano (IT)**
• **Razetti, Luca Gabriele**
**20099 Sesto S. Giovanni (milano) (IT)**
• **Gastaldello, Stefano**
**35037 Teolo (Padova) (IT)**

(74) Representative: **Menzietti, Domenico et al**
**Alcatel**
**Intellectual Property Department,**
**Lorenzstrasse, 10**
**70435 Stuttgart (DE)**

(54) **Method and device for mapping/demapping a trinutary signal into/from a synchronus frame**

(57) It is disclosed a mapper for mapping a tributary from a first frame into a second frame. The mapper comprises: a first register for generating a first counter which is adapted to be increased by a first value at each clock cycle of the first frame; a second register for generating a second counter which is adapted to be increased by a second value at each clock cycle of the second frame; a difference module for calculating a phase error between the first counter and the second counter; and a frame generation module, responsive to the phase error, for mapping the tributary into the second frame.

Fig. 1

EP 1 742 399 A1

**Description**

The present invention generally relates to the field of data transmission networks. In particular, the present invention relates to a method and device for mapping/demapping a tributary signal into/from a synchronous frame. The invention further relates to a network node comprising such a mapper and/or demapper.

In a synchronous transmission network, data are transported as tributary signals (or simply "tributaries") by synchronous frames, which are synchronized by a network reference clock.

Synchronous frames are typically arranged in a synchronous hierarchy. A tributary may be transported by frames of different layers of the synchronous hierarchy.

An asynchronous or plesiochronous tributary, before transmission over a synchronous network, is typically mapped, i.e. it is processed and inserted into a synchronous frame of a certain layer. Such a mapping is typically performed by a device which is termed "mapper" (or "synchronizer").

Similarly, a tributary which is transported by a synchronous frame of a certain layer, before reception, is typically demapped (i.e. extracted) from the frame. Such a demapping is typically performed by a device which is termed "demapper" (or "desynchronizer").

A special application of a mapper is mapping a tributary from a frame of a certain hierarchy layer into a frame of a higher hierarchy layer, i.e. the tributary is extracted from a frame of a certain hierarchy layer and it is inserted into a frame of a higher hierarchy layer.

Similarly, a special application of a demapper is demapping a tributary from a frame of a certain hierarchy layer into a frame of a lower hierarchy layer, i.e. the tributary is extracted from a frame of a certain hierarchy layer and it is inserted into a frame of a lower hierarchy layer.

In the following description, for simplicity, reference will be made to an exemplary two-layer synchronous hierarchy: frames of the lower layer will be termed "lower order frames", while frames of the higher layer will be termed "higher order frames". Nevertheless, the present invention is applicable to any synchronous hierarchy, comprising any number of layers (e.g. Sonet, SDH, etc.)

A synchronous frame (of lower/higher order) may comprise, besides the tributary, redundancy bits. Typically, such redundancy bits are used to implement error correction techniques, such as the FEC ("Forward Error Correction") technique. Number and positions of the redundancy bits in a frame are generally standardized. Further, number and positions of the redundancy bits are typically different in higher order frames and in lower order frames of a same synchronous hierarchy.

When a tributary is mapped from a lower order frame into a higher order frame, possible redundancy bits of the lower order frame are removed, and only tributary bits are inserted into the higher order frame. After mapping, new redundancy bits are calculated and inserted into the higher order frame. The same happens when demapping.

Typically, a mapper receiving a lower order frame writes the tributary bits into a memory; the writing speed depends on the tributary clock frequency. Afterwards, the tributary bits are inserted into the higher order frame, i.e. they are read from the memory at a speed depending on the frequency of the reference clock generated at the node.

Tributary clock frequency and reference clock frequency are generally different. Thus, the writing speed and the reading speed are different (asynchronous mapping). Therefore, a synchronous frame typically provides a number of justification opportunity bits.

If the reading speed is lower than the writing speed (i.e. the reference clock frequency is lower than the tributary clock frequency), reading is "sped up" by inserting tributary bits into justification opportunity bit positions of the higher order frame (negative justification).

Besides, if the reading speed is higher than the writing speed (i.e. the reference clock frequency is higher than the tributary clock frequency), reading is "slowed down" by inserting stuffing bits into justification opportunity bit positions (positive justification).

For determining the justification type and the number of justification opportunity bits to be used, a mapper operates as follows.

The mapper is provided with a writing counter, which is increased by a unit each time a tributary bit is written into the memory, and with a reading counter, which is increased by a unit each time a tributary bit is read from the memory. Thus, the values of the writing and reading counters correspond to a writing address and to a reading address of the successive tributary bit, respectively.

The mapper then calculates the difference between the two counters (which will be termed "phase error"). The phase error is processed by a device, e.g. a SigmaDelta, comprised into the mapper. The SigmaDelta integrates the error phase and determines the justification type.

However, it has to be noticed that the writing counter is fixed when the mapper removes redundancy bits from the lower order frame. Similarly, the reading counter is fixed when the mapper inserts new redundancy bits into the higher order frame. Thus, the time evolutions of the writing and reading counters are different, since the redundancy bit positions into the lower order and higher order frames are different.

This implies high phase errors, which may result in the following drawbacks.

The SigmaDelta typically comprises a digital integrator which is adapted to integrate the phase error and whose output is comprised between a minimum value (negative) and a maximum value (positive). Thus, for high phase errors, the digital integrator enters a saturation regime, so that its output exhibits strong oscillations between the minimum value and the maximum value. These oscillations due to the integrator saturation induce a "saturation jitter" on the tributary clock transferred into the higher order frame.

Similar considerations applies also to a demapper which demaps a tributary from a higher order frame into a lower order frame.

Like a mapper, a demapper writes into a memory the tributary bits contained in a higher order frame, and reads them from the memory to insert them into a lower order frame. In this case, the writing speed depends on the tributary clock frequency, while the reading speed depends on a clock which is recovered from the tributary itself, typically by means of a PLL.

Also in this case, the writing counter and the reading counter are different due to the different positions of the redundancy bits into the higher order and lower order frames.

Thus, also in this case the phase error may be high enough to induce the digital integrator to saturate. Thus, the digital integrator output may exhibit strong oscillations between its minimum value and its maximum value. Thus, the recovered clock is affected by saturation jitter.

Therefore, the general object of the present invention is providing a mapper and a demapper which allow to reduce the saturation jitter of the tributary clock.

This and further objects are achieved by a mapper according to claim 1, a demapper according to claim 5, a method of mapping according to claim 9, a method of demapping according to claim 13, and a network node according to claim 17. Further advantageous features of the present invention are set forth into the respective dependent claims. All the claims are deemed to be an integral part of the present description.

In a first aspect, the present invention provides a mapper for mapping a tributary from a first frame into a second frame, wherein the mapper comprises: a first register for generating a first counter which is adapted to be increased by a first value at each clock cycle of the first frame; a second register for generating a second counter which is adapted to be increased by a second value at each clock cycle of said second frame; a difference module for calculating a phase error between the first and the second counter; and a frame generation module, responsive to the phase error, for mapping the tributary into the second frame.

According to a second aspect, the present invention provides a demapper for demapping a tributary from a first frame into a second frame, wherein the demapper comprises: a first register for generating a first counter which is adapted to be increased by a first value at each clock cycle of the first frame; a second register for generating a second counter which is adapted to be increased by a second value at each clock cycle of the second frame; a difference module for calculating a phase error between the first counter and the second counter; and a frame generation module, responsive to the phase error, for demapping the tributary into the second frame.

Further characteristics and advantages of the present invention will become clear by the following detailed description, given by way of example and not of limitation, with reference to the accompanying drawings, wherein:

- Figure 1 schematically shows a mapper according to an embodiment of the present invention;
- Figure 2 schematically shows a demapper according to an embodiment of the present invention;
- Figures 3a and 3b show time diagrams which describe the operation of the mapper of Figure 1;
- Figure 4 shows a time diagram of an example of the evolution of a master writing counter and a master reading counter;
- Figure 5 shows a time diagram of the phase error between the counters of Figure 4; and
- Figure 6 shows a time diagram of the integrator output wherein the input is the phase error shown in Figure 5.

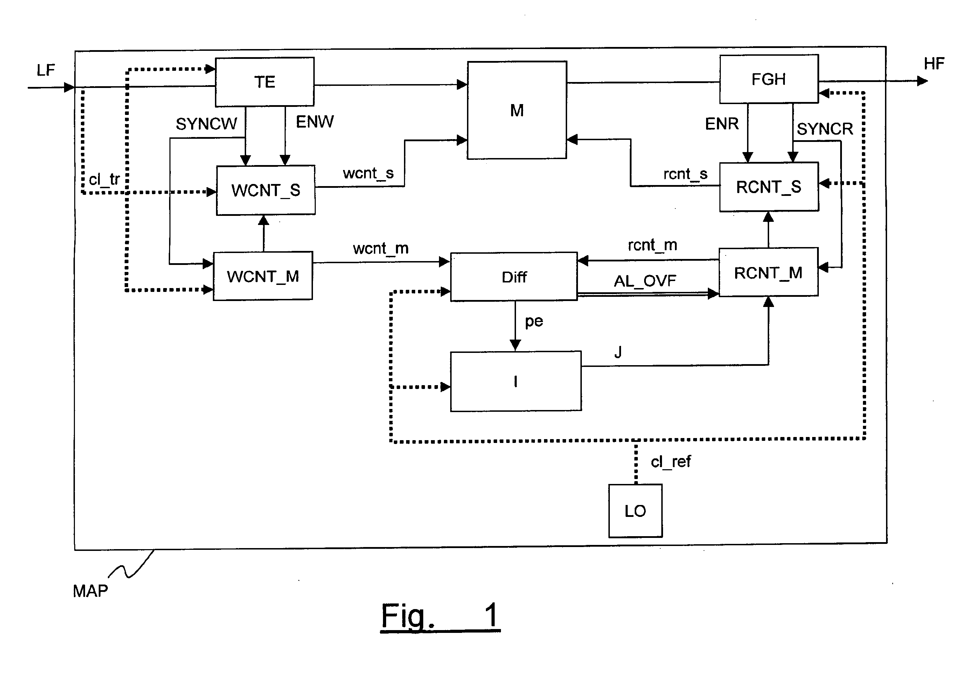

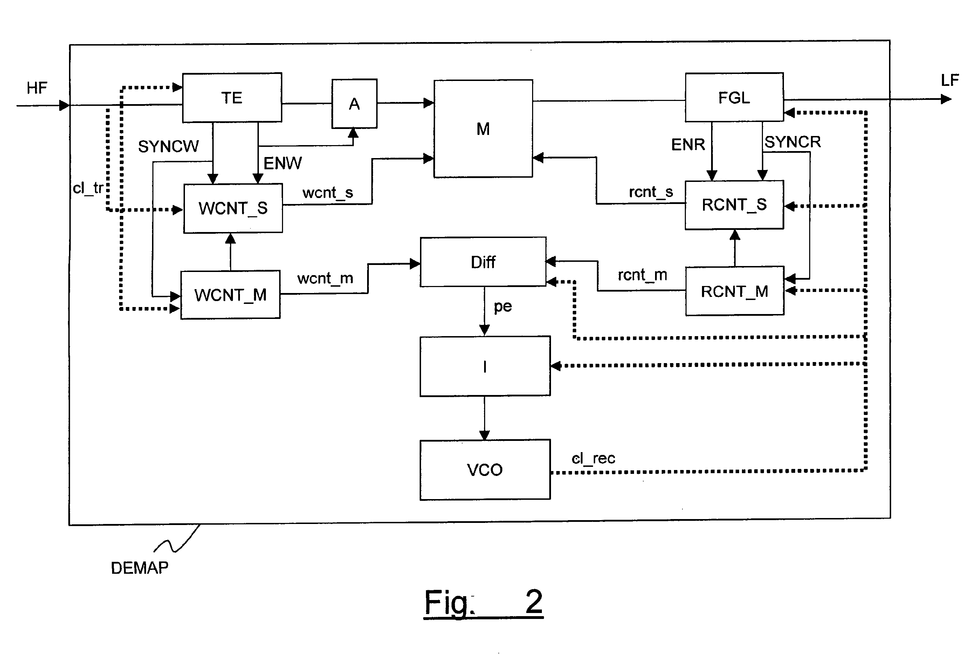

Figure 1 shows a mapper MAP according to the present invention, which is adapted to map the tributary from a lower order frame LF into a higher order frame HF.

The mapper MAP comprises an elastic memory M (for instance a RAM), which is adapted to store D words, each word comprising W bits. Thus, the overall number of bits that the memory M can store is DxW.

At the input of the memory M, a tributary extraction module TE is provided for extracting the tributary from the lower order frame; such a module TE is adapted to remove from the lower order frame LF the redundancy bits. The module TE then writes into the memory M the tributary bits.

The mapper MAP according to the present invention comprises a register WCNT_M whose size is d+dw, wherein d=log2(D) and dw=log2(W). The register WCNT_M is adapted to receive from the module TE a writing synchronization signal SYNCW and to generate a master writing counter wcnt_m of d+dw bits.

The mapper MAP further comprises a register WCNT_S, whose size is d=log2(D). The register WCNT_S is adapted to receive the writing synchronization signal SYNCW and a writing enable signal ENW from the module TE. Further, it is adapted to receive information from the register WCNT_M, as it will be described in greater detail herein after. The register WCNT_S is adapted to calculate a slave reading counter wcnt_s of d bits, and to provide the memory M with such a counter.

The module TE, the register WCNT_S and the register WCNT_M are synchronized by the tributary clock cl_tr which is implicit into the tributary transported by the lower order frame LF. The clock cl_tr is shown in Figure 1 with dashed arrows; such a representation is only aimed to distinguish the clock from the other signals exchanged by the blocks of the mapper MAP. The same consideration applies also to the other clocks of Figures 1 and 2.

At the output of the memory M, a frame generation module FGH is provided for generating the higher order frame, such a module being adapted to read from the memory M the tributary bits and to insert them into the higher order frame HF.

The mapper MAP, according to the present invention, further comprises a register RCNT_M, having a size equal to d+dw. The register RCNT_M is adapted to receive from the module FGH a reading synchronization signal SYNCR and to generate a master reading counter rcnt_m of d+dw bits.

The mapper MAP further comprises a register RCNT_S whose size is d. The register RCNT_S is adapted to receive the reading synchronization signal SYNCR and a reading enable signal ENR from the module FGH. Further, it is adapted to receive information from the register RCNT_M, as it will be explained in further detail herein after. The register RCNT_S is adapted to calculate a slave reading counter rcnt_s of d bits and to provide the memory M with such a counter, as it will be explained in further detail herein after.

The register WCNT_M and the register RCNT_M are connected to a difference module Diff. Such a module is adapted to calculate a phase error pe, i.e. a difference between the master writing counter wcnt_m and the master reading counter rcnt_m.

The difference module Diff is connected to a SigmaDelta SD, which is adapted to receive the phase error pe from the module Diff and to calculate, based on pe, the justification type J.

The mapper MAP further comprises a local oscillator LO, which generates the reference clock cl_ref for generating the higher order frame. The reference clock cl_ref synchronizes the operation of the module FGH, the register RCNT_M, the register RCNT_S, the module Diff and the SigmaDelta SD.

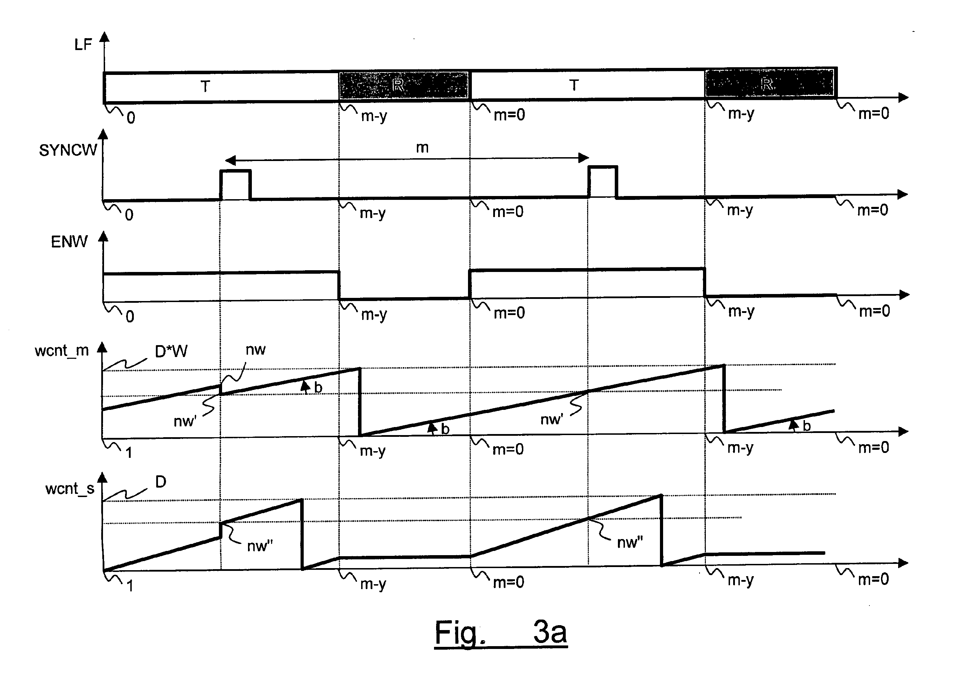

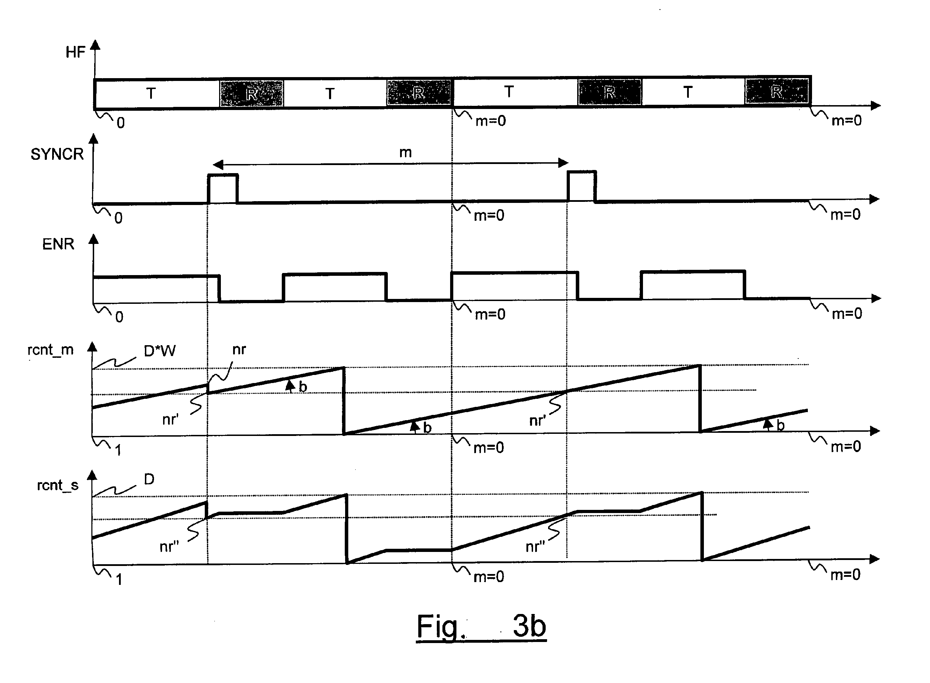

Now, by referring also to Figures 3a and 3b (which are not in scale), the operation of the mapper MAP according to an embodiment of the present invention will be explained in details.

When a sequence of lower order frames LF enters the mapper MAP, the module TE removes the redundancy bits from each frame. Then, as already mentioned, it sends the writing enable signal ENW to the register WCNT_S. For instance, such a writing enable signal ENW may have a high logic value when tributary bits are written into the memory M, and a low logic value when redundancy bits are removed.

As shown for instance in Figure 3a, it is assumed that the frame LF comprises mw clock cycles. It is assumed that the frame LF comprises tributary bits T for the first mw-yw clock cycles, while it comprises redundancy bits R for the last yw clock cycles. Figure 3a only shows two consecutive frames LF. The numbering of the clock cycles is reset at the beginning of each frame.

Thus, the writing enable signal ENW is high for the first mw-yw clock cycles, while it is low for the last yw clock cycles.

According to the present invention, the master writing counter wcnt_m is increased at each clock cycle. At each clock cycle, the master writing counter wcnt_m is increased by an integer value such that, in mw clock cycles, the counter wcnt_m counts Nw bits, wherein Nw is the number of tributary bits T comprised into a lower order frame LF. Thus, at each clock cycle, the counter wcnt_m is increased by a value bw, wherein bw=Nw/mw.

As bw has to be an integer number, if Nw/mw does not result in an integer value, the present invention provides for calculating two values bw1 and bw2 so that (bw1 *(mw-y')+bw2*y')=Nw, wherein bw1 and bw2 are integer numbers, and y' is an integer number between 1 and mw-1. In this case, the counter wcnt_m is increased by bw1 for mw-y' clock cycles, and by bw2 for y' clock cycles.

The counter wcnt_m is linearly increased until it reaches its maximum value (i.e. DxW), and then it restarts from zero.

In Figure 3a, for simplicity, it is assumed that DxW (i.e. the memory size expressed in bits) is equal to Nw, which is the number of tributary bits in a frame LF. Therefore, the counter wcnt_m is periodic with period equal to a period of a frame LF (i.e. mw clock cycles). In general, however, the memory size in bits (DxW) is different from Nw.

The operation of the master reading counter rcnt_m is similar to the above described operation of the master writing counter wcnt_m. It will be now briefly described by referring to Figures 1 and 3b.

In order to generate a higher order frame HF, the module FGH reads the tributary bits from the memory M at a reading speed which depends on the reference clock cl_ref. As already mentioned, the module FGH sends to the register RCNT_S the reading enable signal ENR. For instance, the reading enable signal ENR is high when reading tributary bits, and it is low when redundancy bits are inserted, as shown in Figure 3b.

As shown in Figure 3b, the frame HF comprises mr clock cycles. The redundancy bits R are distributed into the frame HF as shown in Figure 3b. By comparing Figures 3a and 3b, it can be noticed that the frames LF and HF have different structures.

According to the present invention, the master reading counter rcnt_m is increased at each clock cycle by a value br, such that br=Nr/mr, wherein Nr is the number of tributary bits comprised into a frame HF. If Nr/mr does not result in an integer number, the present invention provides for calculating two integer values br1 and br2 so that (br1* (mr-y")+br2*y")=Nr, wherein y" is an integer number comprised between 1 and mr-1. In this case, the counter rcnt_m is increased by br1 for mr-y" clock cycles and by br2 for y" clock cycles.

The counter rcnt_m is linearly increased until it reaches its maximum value (i.e. DxW), and then it restarts from zero.

Also in Figure 3b, DxW (i.e. the memory size expressed in bits) is equal to Nr. Therefore, also the counter rcnt_m is periodic with period equal to a period of the frame HF (i.e. mr clock cycles).

According to the present invention, the master writing counter wcnt_m controls the slave writing counter wcnt_s.

More particularly, as already mentioned, the module TE is adapted to send the writing synchronization signal SYNCW to the registers WCNT_M and WCNT_S. Such a signal, as shown in Figure 3a, is a periodic signal with a period of mw clock cycles, which assumes high logic value for a single clock cycle (which will be referred to as writing synchronization clock cycle) every mw clock cycles. Writing synchronization clock cycles of successive frames are placed at the same position of the frame, as shown in Figure 3a.

When the writing synchronization signal SYNCW is high, according to the present invention, the slave writing counter wcnt_s is synchronized to the master writing counter wcnt_m, i.e. their values are forced to be equal. Such a synchronization preferably comprises the two following steps:

- in the counter wcnt_m of d+dw bits, the dw less significant bits are forced to zero; and
- the counter wcnt_s of d bits is forced to the d most significant bits of the counter wcnt_m.

By still referring to Figure 3a, it is assumed that when the signal SYNW is high, the master writing counter wcnt_m assumes a generic value nw. Its dw less significant bits are forced to zero by performing the following operation:

$$nw' = int\left(\frac{nw}{W}\right) \cdot W , \qquad [1]$$

wherein int(·) indicates the integer function. nw' is thus the new value of the counter wcnt_m which has been calculated during the synchronization cycle.

Then, according to the present invention, the d most significant bits of the counter wcnt_m are forced into the counter wcnt_s, i.e. the counter wcnt_s assumes a value given by:

$$nw'' = \frac{nw'}{W} . \qquad [2]$$

When the writing synchronization signal is low again, the counter wcnt_m is increased by bw at each clock cycle (or bw1 and bw2, if bw is not an integer), until it assumes its maximum value DxW. Then it restarts from zero and it continues being increased by bw at each clock cycle.

In the meanwhile, the counter wcnt_s is increased by 1 at each clock cycle wherein the writing enable signal ENW is high, until it reaches its maximum value D. Then, it restarts from zero.

After mw clock cycles, the writing synchronization signal SYNCW is high again. If the mapper is properly working, after mw clock cycles the two counters wcnt_m and wcnt_s are again synchronized (i.e. they assume again their values nw' and nw", respectively).

In a preferred embodiment of the invention, however, the above describe synchronization operations (i.e. forcing to zero the dw less significant bits of wcnt_m and forcing the d most significant bits of wcnt_m into wcnt_s) may be performed for each frame every time the signal SYNCW is high, thus implying advantages that will be described in further details herein after.

According to the present invention, similarly to the master writing counter wcnt_m, also the master reading counter rcnt_m controls the respective slave reading counter rcnt_s. The operation, which is similar to the one of the writing counters, will be briefly described by referring to Figures 1 and 3b.

As already mentioned, the module FGH, according to the present invention, is adapted to send the reading synchronization signal SYNCR to the registers RCNT_M and RCNT_S. Such a signal SYNCR is a periodic signal with a period of mr clock cycles, which assumes high logic value for a single clock cycle (which will be referred to as reading synchronization clock cycle) every mr clock cycles. Reading synchronization clock cycles of successive frames are placed at the same position of the frame, as shown in Figure 3b.

When the reading synchronization signal SYNCR is high, according to the present invention, the slave reading counter rcnt_s is synchronized to the master reading counter rcnt_m. Such a synchronization preferably comprises the two following steps:

- in the counter rcnt_m of d+dw bits, the dw less significant bits are forced to zero; and
- the counter rcnt_s of d bits is forced to the d most significant bits of the counter rcnt_m.

By still referring to Figure 3b, it is assumed that when the signal SYNCR is high, the master reading counter rcnt_m assumes a generic integer value nr. Its dw less significant bits are forced to zero by performing the following operation:

$$nr' = int\left(\frac{nr}{W}\right) \cdot W \ . \qquad\qquad [3]$$

nr' is thus the new value of the counter rcnt_m which has been calculated during the synchronization cycle.

Then, according to the present invention, the d most significant bits of the counter rcnt_m are forced into the counter rcnt_s, i.e. the counter rcnt_s assumes a value given by:

$$nr'' = \frac{nr'}{W} \ . \qquad\qquad [4]$$

When the reading synchronization signal SYNCR assumes again its low logic value, the counter rcnt_m is increased by br at each clock cycle (or br1 and br2, if br is not an integer), until it reaches its maximum value DxW. Then it restarts from zero and it keeps on being increased by bw at each clock cycle.

In the meanwhile, the counter rcnt_s is increased by 1 at each clock cycle wherein the signal ENR is high, until it reaches its maximum value D. Then, it restarts counting from zero.

After mr clock cycles, the reading synchronization signal SYNCR is high again. If the mapper is properly working, after mr clock cycles the two counters rcnt_m and rcnt_s are again synchronized (i.e. they assume again their values nr' and nr'', respectively).

In a preferred embodiment of the invention, however, the above synchronization operations (i.e. forcing to zero the dw less significant bits of rcnt_m and forcing the d most significant bits of rcnt_m into rcnt_s) may be performed every time the signal SYNCR is high, with advantages which will be discussed herein after.

It can be seen that both the master counters wcnt_m and rcnt_m have a saw-tooth behavior with the same maximum value (DxW).

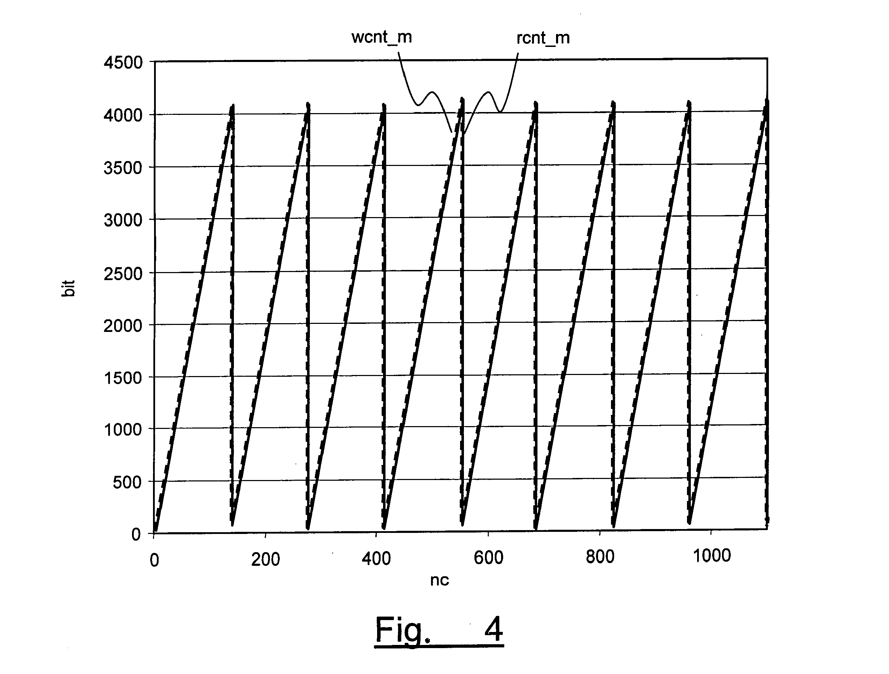

Figure 4 is an example of a diagram showing the time evolution of the counters wcnt_m and rcnt_m as a function of the number of clock cycles of the higher order frame HF.

Such an example relates to the Optical Transport Network standard, which is defined by the ITU-T G.709 Recommendation. Such a standard defines a synchronous hierarchy comprising OTU1 optical transport units at 2.666 Gbit/s, OTU2 optical transport units at 10.709 Gbit/s and OTU3 optical transport units at 43.018 Gbit/s. The Figure 4 is relative to a mapper which is adapted to asynchronously map an ODU1 tributary from an OTU1 optical transport unit to an OTU2 optical transport unit in a OTN network.

Thus, in this example the frame LF is an OTU1 optical transport unit, the frame HF is an OTU2 optical transport unit and the tributary is ODU1. The diagram shows the time evolution of the counters for 1100 clock cycles nc.

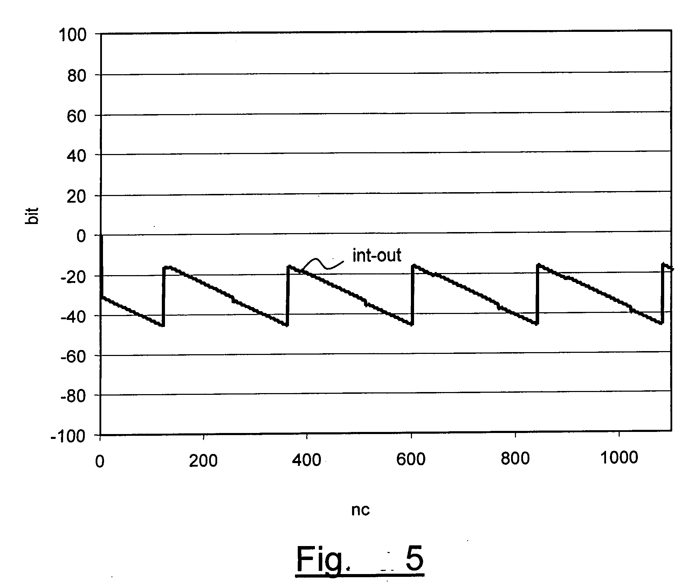

The time evolution of the two counters wcnt_m and rcnt_m is similar (unless a constant offset, which is not shown in Figure 4, as it will be explained herein after). Figure 5 shows the phase error pe, calculated by the difference module Diff as the difference between wcnt_m and rcnt_m. The phase error pe advantageously has small values, comprised between -45 and 0 bits.

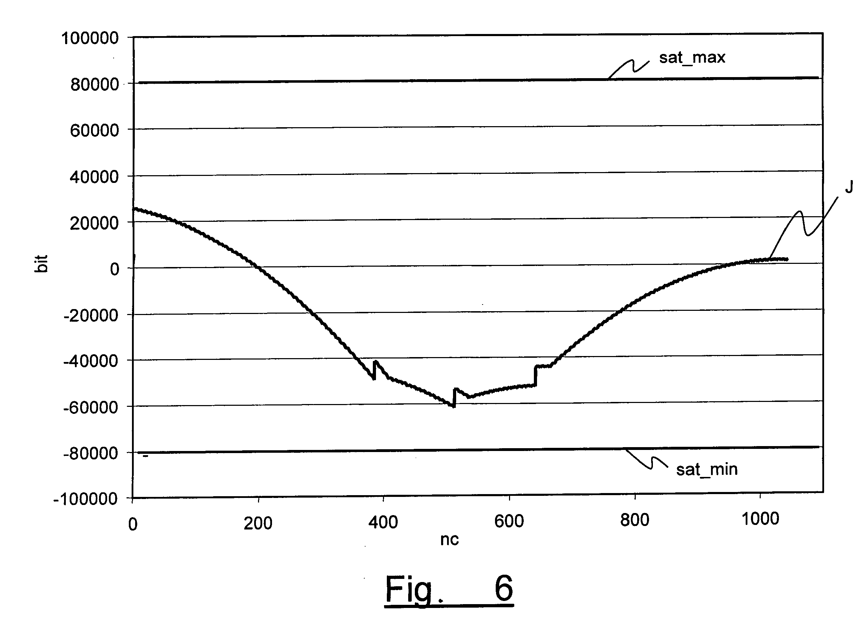

Figure 6 shows the integrator output int-out of the digital integrator comprised into the SigmaDelta, calculated by integrating the phase error pe of Figure 5. The integrator output always assumes values comprised within the minimum saturation values sat_min and the maximum saturation value sat_max, without reaching such values and substantially without significant oscillations. Thus, the saturation jitter has been substantially removed.

By still referring Figures 3a and 3b, the slave counters wcnt_s and rcnt_s assume values between 1 and D, i.e. they count the words written/read into/from the memory M. As these counters depend on the structure of the lower order and higher order frames, respectively (namely, on the number/positions of the redundancy bits), these counters represent the writing address and the reading address, respectively, of tributary words formed by W tributary bits. Therefore, these slave counters are provided to the memory M, where they manage the writing/reading operation, respectively.

The present invention advantageously allows to implement different justification types. For instance, when asynchronously mapping an ODU1 tributary from an OTU1 optical transport unit into an OTU2 optical transport unit, four justification types are provided, depending on the number of justification opportunity bytes which are filled either by tributary bytes or by stuffing bytes.

In mappers according to the prior art, the justification type calculated by the SigmaDelta is directly applied to the reading counter, which corresponds to the reading address.

According to the present invention, in the mapper MAP of Figure 1 the justification type J calculated by the SigmaDelta SD is applied both to the master reading counter rcnt_m and to slave reading counter rcnt_s. In this way, the reading address is suitably modified, while keeping the master and slave reading counters synchronized.

The present invention also advantageously allows to preserve the traditional memory overflow management. The memory enters an overflow state when, at a given clock cycle, the writing address and the reading address assume the same value. This means that the mapper is reading from the same position wherein it is writing, thus losing data.

In order to avoid memory overflow, in a known mapper the difference module typically compares the phase error with a predetermined threshold at each clock cycle.

If the phase error is lower than the overflow threshold, the difference module generates an overflow alarm. Such an overflow alarm is typically sent to the reading counter. Upon reception of the overflow alarm, the reading counter sets its value (i.e. the reading address) to a default value. Such a default value is typically a value pointing to the furthest position relative to the position pointed by the writing address. In this way, the mapper is brought as far as possible from an overflow state. Thus, in optimal working conditions from the memory management point of view, the writing address and the reading address have an offset equal to half the memory size DxW.

In the mapper MAP according to the present invention, the memory overflow is managed as follows (reference can be made to Figure 1). The difference module Diff compares the phase error pe with an overflow threshold. If the phase error pe is lower than the overflow threshold, the module Diff sends an overflow alarm AL_OVF to the register RCNT_M.

According to the invention, upon reception of the AL_OVF, the register RCNT_M forces the rcnt_m to a value which is opposite to the current value of the master writing counter wcnt_m. At the next reading synchronization clock cycle SYNCR, the new value of the master reading counter rcnt_m is forced into the slave reading counter rcnt_s. Thus, as the counter wcnt_s is synchronized to the counter wcnt_m, at the reading synchronization clock cycle SYNCR the value of the counter rcnt_s (i.e. the reading address) is opposite to the value of the counter wcnt_s (i.e. the writing address).

Thus, according to the invention, the memory overflow management is preserved.

According to another aspect, the present invention further provides a demapper which is able to reduce or substantially eliminate the saturation jitter. The structure and the operation of the demapper according to the present invention is substantially similar to the structure and the operation of the mapper MAP of Figure 1.

Figure 2 shows a demapper DEMAP according to the present invention, which is adapted to demap a tributary from a higher order frame HF into a lower order frame LF.

The demapper DEMAP comprises an elastic memory M (for instance a RAM), for storing D words, each word comprising W bits. Thus, the overall number of tributary bits that the memory M can store is DxW.

At the input of the memory M, a tributary extraction module TE is provided for extracting the tributary from the higher order frame; such a module is further adapted to remove the redundancy bits from the higher order frame HF. The module TE then writes the tributary bits into the memory M.

At the input of the memory M an aligner A is further provided, which is cascaded with the module TE. The aligner A is adapted to find the first tributary word and to write into the memory M an alignment bit for each memory row, i.e. for each stored tributary word. Such an alignment bit could be high for the first tributary word, while it could be low for the other tributary words. Thanks to the alignment bit, the tributary can be properly inserted into the lower order frame LF.

According to the invention, the demapper DEMAP further comprises a register WCNT_M, whose size is d+dw. The register WCNT_M is adapted to receive from the module TE a writing synchronization signal SYNCW, and to generate a master writing counter wcnt_m of d+dw bits.

The demapper DEMAP further comprises a register WCNT_S, whose size is d. The register WCNT_S is adapted to receive the writing synchronization signal SYNCW and a writing enable signal ENW from the module TE. It is further adapted to receive information from the register WCNT_M, as it will be explained herein after. The register WCNT_S is adapted to calculate a slave writing counter wcnt_s of d bits, and to provide the memory M with such a counter.

The module TE, the register WCNT_S and the register WCNT_M are synchronized by the tributary clock cl_tr, which is implicit into the tributary transported by the higher order frame HF.

At the output of the memory M, a frame generation module FGL is provided for generating the lower order frame, such a module being adapted to read tributary bits from the memory M, and to insert them into the lower order frame LF.

According to the present invention, the demapper DEMAP further comprises a register RCNT_M, whose size is d+dw. The register RCNT_M is adapted to receive from the module FGL a reading synchronization signal SYNCR, and to generate a master reading counter rcnt_m of d+dw bits.

The demapper DEMAP further comprises a register RCNT_S, whose size is d. The register RCNT_S is adapted to receive the reading synchronization signal SYNCR and a reading enable signal ENR from the module FGL. Further, it is adapted to receive information from the register RCNT_M, as it will be explained in detail herein after. The register RCNT_S is adapted to calculate a slave reading counter rcnt_s of d bits, and to provide the memory M with such a counter.

The register WCNT_M and the register RCNT_M are connected to a difference module Diff. Such a module Diff is adapted to calculate a phase error pe between the master writing counter wcnt_m and the master reading counter rcnt_m.

The difference module Diff is connected to a digital-analog converter DAC. The digital-analog converter DAC preferably comprises a digital integrator (not shown). The converter DAC integrates the phase error pe and provides its output to a voltage-controlled oscillator VCO. The voltage-controlled oscillator VCO outputs a recovered clock cl_rec.

Such a recovered clock cl_rec synchronizes the module FGL, the register RCNT_M, the register RCNT_S, the module Diff and the converter DAC. Thus, the module Diff, the converter DAC and the VCO are in a loop configuration, i.e. they substantially form a PLL, whose function is to recover a clock cl_rec whose frequency is equal to the frequency of the tributary clock cl_tr.

As in the mapper, in the demapper DEMAP according to the present invention, the master writing counter wcnt_m is increased by a value bw such that, in a HF frame period, the counter counts Nw bits, wherein Nw is the number of tributary bits in a frame HF. Thus, bw=Nw/mw, where mw is the number of clock cycles comprised in a frame HF.

Similarly, at each clock cycle, the master reading counter rcnt_m is increased by a value br such that, in a LF frame period, the counter counts Nr bits, wherein Nr is the number of tributary bits in a frame LF. Thus, br=Nr/mr, where mr is the number of clock cycles comprised in a frame LF.

As in the mapper of Figure 1, the module TE generates the writing synchronization signal SYNCW, and the module FGL generates the reading synchronization signal SYNCR. Such signals are high every mw and every mr clock cycles, respectively.

When SYNCW is high, the counter wcnt_s is synchronized to the counter wcnt_m. This is preferably implemented by forcing the dw less significant bits of wcnt_m to zero, and by forcing the d most significant bits of wcnt_m into the counter wcnt_s.

Similarly, when SYNCR is high, the counter rcnt_s is synchronized to the counter rcnt_m. This is preferably implemented by forcing the dw less significant bits of rcnt_m to zero, and by forcing the d most significant bits of rcnt_m into the counter rcnt_s.

After the synchronization cycle, the master counters wcnt_m and rcnt_m are increased by bw and br respectively, at each clock cycle. When they reach their maximum value DxW, they restart counting from zero.

Besides, the slave counters wcnt_s and rcnt_s are increased by 1 at each clock cycle, when the respective enable signals ENW and ENR are high. When they reach their maximum value D, they restart counting from zero.

As in the demapper DEMAP according to the present invention the phase error pe is calculated as the difference between the master counters wcnt_m and rcnt_m, as in the mapper such an error phase pe is always very small, so that the converted DAC does not enter a saturation regime. Thus, advantageously, the recovered clock is not affected by saturation jitter.

The mapper and demapper according to the present invention may be implemented in any known manner, preferably by means of the VHDL software, which is successively synthesized in ASIC or FPGA devices, or the like.

**Claims**

1.  Mapper (MAP) for mapping a tributary from a first frame (LF) to a second frame (HF), **characterized in that** said mapper (MAP) comprises:

    - a first register (WCNT_M) for generating a first counter (wcnt_m) which is adapted to be increased by a first value (bw) at each clock cycle of said first frame (LF);
    - a second register (RCNT_M) for generating a second counter (rcnt_m) which is adapted to be increased by a second value (br) at each clock cycle of said second frame (HF);

- a difference module (Diff) for calculating a phase error (pe) between said first counter (wcnt_m) and said second counter (rcnt_m); and
- a frame generation module (FGH), responsive to said phase error (pe), for mapping said tributary into said second frame (HF).

2. Mapper (MAP) according to claim 1, **characterized in that** said first value (bw) is the ratio between a number (Nw) of tributary bits comprised in said first frame (LF) and a number (mw) of clock cycles comprised in said first frame, and **in that** said second value (br) is the ratio between a number (Nr) of tributary bits comprised in said second frame (HF) and a number (mr) of clock cycles comprised in said second frame.

3. Mapper (MAP) according to claim 1 or 2, **characterized in that** it further comprises:

- a third register (WCNT_S) for generating a third counter (wcnt_s) which is adapted to be increased by a third value at each clock cycle of said first frame (LF) wherein a word of said tributary is written in a memory (M), wherein said third counter (wcnt_s) is synchronized to said first counter (wcnt_m) at a first predetermined instant (SYNCW); and
- a fourth register (RCNT_S) for generating a fourth counter (rcnt_s) which is adapted to be increased by said third value at each clock cycle of said second frame (HF) wherein a word of said tributary is read from said memory (M), said fourth counter (rcnt_s) being synchronized to said second counter (rcnt_m) at a second predetermined instant (SYNCR).

4. Mapper (MAP) according to claim 3, **characterized in that** said third register (WCNT_S) and said fourth register (RCNT_S) are further adapted to provide said memory (M) with said third counter (wcnt_s) and said fourth counter (rcnt_s) respectively, in order to manage writing and reading operations, respectively.

5. Demapper (DEMAP) for demapping a tributary from a first frame (HF) to a second frame (LF), **characterized in that** said demapper (DEMAP) comprises:

- a first register (WCNT_M) for generating a first counter (wcnt_m) which is adapted to be increased by a first value (bw) at each clock cycle of said first frame (HF);
- a second register (RCNT_M) for generating a second counter (rcnt_m) which is adapted to be increased by a second value (br) at each clock cycle of said second frame (LF);
- a difference module (Diff) for calculating a phase error (pe) between said first counter (wcnt_m) and said second counter (rcnt_m); and
- a frame generation module (FGL), responsive to said phase error (pe), for demapping said tributary into said second frame (LF).

6. Demapper (DEMAP) according to claim 5, **characterized in that** said first value (bw) is the ratio between a number (Nw) of tributary bits comprised in said first frame (HF) and a number (mw) of clock cycles comprised in said first frame, and **in that** said second value (br) is the ratio between a number (Nr) of tributary bits comprised in said second frame (LF) and a number (mr) of clock cycles comprised in said second frame.

7. Demapper (DEMAP) according to claim 5 or 6, **characterized in that** it further comprises:

- a third register (WCNT_S) for generating a third counter (wcnt_s) which is adapted to be increased by a third value at each clock cycle of said first frame (HF) wherein a word of said tributary is written in a memory (M), said third counter (wcnt_s) being synchronized to said first counter (wcnt_m) at a first predetermined instant (SYNCW); and
- a fourth register (RCNT_S) for generating a fourth counter (rcnt_s) which is adapted to be increased by said third value at each clock cycle of said second frame (LF) wherein a word of said tributary is read from said memory (M), said fourth counter (rcnt_s) being synchronized to said second counter (rcnt_m) at a second predetermined instant (SYNCR).

8. Demapper (DEMAP) according to claim 7, **characterized in that** said third register (WCNT_S) and said fourth register (RCNT_S) are further adapted to provide said memory (M) with said third counter (wcnt_s) and said fourth counter (rcnt_s) respectively, in order to manage writing and reading operations, respectively.

9. Method of mapping a tributary from a first frame (LF) into a second frame (HF), **characterized in that** it comprises:

- providing a first counter (wcnt_m) and a second counter (rcnt_m);
- increasing said first counter (wcnt_m) by a first value (bw) at each clock cycle of said first frame (LF);
- increasing said second counter (rcnt_m) by a second value (br) at each clock cycle of said second frame (HF);
- calculating a phase error (pe) between said first counter (wcnt_m) and said second counter (rcnt_m); and
- mapping said tributary in said second frame (HF), by generating said second frame (HF) according to said phase error (pe).

10. Method according to claim 9, **characterized in that** said first value (bw) is the ratio between a number (Nw) of tributary bits comprised in said first frame (LF) and a number (mw) of clock cycles comprised in said first frame, and **in that** said second value (br) is the ratio between a number (Nr) of tributary bits comprised in said second frame (HF) and a number (mr) of clock cycles comprised in said second frame.

11. Method according to claim 9 or 10, **characterized in that** it further comprises:

- providing a third counter (wcnt_s) and a fourth counter (rcnt_s);
- synchronizing said third counter (wcnt_s) to said first counter (wcnt_m) at a first predetermined instant (SYNCW);
- increasing said third counter (wcnt_s) by a third value at each clock cycle of said first frame (LF) wherein a word of said tributary is written into a memory (M);
- synchronizing said fourth counter (rcnt_s) to said second counter (rcnt_m) at a second predetermined instant (SYNCR); and
- increasing said fourth counter (rcnt_s) by said third value at each clock cycle of said second frame (HF) wherein a word of said tributary is read from said memory (M).

12. Method according to claim 11, **characterized in that** it further comprises the step of managing writing and reading operations by means of said third counter (wcnt_s) and said fourth counter (rcnt_s), respectively.

13. Method of demapping a tributary from a first frame (HF) into a second frame (LF), **characterized in that** it comprises:

- providing a first counter (wcnt_m) and a second counter (rcnt_m);
- increasing said first counter (wcnt_m) by a first value (bw) at each clock cycle of said first frame (HF);
- increasing said second counter (rcnt_m) by a second value (br) at each clock cycle of said second frame (LF);
- calculating a phase error (pe) between said first counter (wcnt_m) and said second counter (rcnt_m); and
- demapping said tributary in said second frame (LF), generating said second frame (LF) according to said phase error (pe).

14. Method according to claim 13, **characterized in that** said first value (bw) is the ratio between a number (Nw) of tributary bits comprised in said first frame (HF) and a number (mw) of clock cycles comprised in said first frame, and **in that** said second value (br) is the ratio between a number (Nr) of tributary bits comprised in said second frame and a number (mr) of clock cycles comprised in said second frame.

15. Method according to claim 13 or 14, **characterized in that** it further comprises:

- providing a third counter (wcnt_s) and a fourth counter (rcnt_s);
- synchronizing said third counter (wcnt_s) to said first counter (wcnt_m) at a first predetermined instant (SYNCW);
- increasing said third counter (wcnt_s) by a third value at each clock cycle of said first frame (HF) wherein a word of said tributary is written into a memory (M);
- synchronizing said fourth counter (rcnt_s) to said second counter (rcnt_m) at a second predetermined instant (SYNCR); and
- increasing said fourth counter (wcnt_s) by said third value at each clock cycle of said second frame (LF) wherein a word of said tributary is read from said memory (M).

16. Method according to claim 15, **characterized in that** it further comprises the step of managing writing and reading operations by means of said third counter (wcnt_s) and said fourth counter (rcnt_s), respectively.

17. Network node comprising a mapper according to any of claims 1 to 4 and/or a demapper according to any of claims 5 to 8.

EP 1 742 399 A1

Fig.  1

EP 1 742 399 A1

Fig.    2

Fig. 3a

EP 1 742 399 A1

Fig. 3b

Fig. 4

int-out

nc

Fig. 5

Fig. 6

**European Patent Office**

**EUROPEAN SEARCH REPORT**

Application Number

EP 06 01 2798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 703 915 A (VERGNES ET AL) 30 December 1997 (1997-12-30) * column 2, line 41 - line 67 * * column 3, line 20 - line 56 * * column 4, line 29 - line 49 * * column 5, line 26 - line 32 * * figures 1,4,7,9 * ----- | 1-17 | INV. H04J3/07 |
| A | EP 0 412 575 A (PHILIPS PATENTVERWALTUNG GMBH; N.V. PHILIPS' GLOEILAMPENFABRIEKEN; PHI) 13 February 1991 (1991-02-13) * the whole document * ----- | 1-17 | |
| A | US 6 526 069 B1 (WOLF MICHAEL ET AL) 25 February 2003 (2003-02-25) * column 2, line 54 - column 4, line 32 * ----- | 1-17 | |

TECHNICAL FIELDS SEARCHED (IPC)

H04J

The present search report has been drawn up for all claims

| Place of search | Date of completion of the search | Examiner |
|---|---|---|
| Munich | 28 July 2006 | Belloni, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                      EP 06 01 2798

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2006

| Patent document cited in search report | | Publication date | Patent family member(s) | | Publication date |
|---|---|---|---|---|---|
| US 5703915 | A | 30-12-1997 | CN | 1124895 A | 19-06-1996 |
| | | | EP | 0702465 A1 | 20-03-1996 |
| | | | JP | 8172455 A | 02-07-1996 |
| EP 0412575 | A | 13-02-1991 | AT | 132677 T | 15-01-1996 |
| | | | DE | 3926251 A1 | 14-02-1991 |
| | | | DK | 412575 T3 | 13-05-1996 |
| | | | ES | 2083987 T3 | 01-05-1996 |
| | | | GR | 3019524 T3 | 31-07-1996 |
| US 6526069 | B1 | 25-02-2003 | CA | 2259644 A1 | 06-08-1999 |
| | | | EP | 0935362 A2 | 11-08-1999 |

EPO FORM P0459

For more details about this annex : see Official Journal of the European Patent Office, No. 12/82